# EUROPEAN PATENT SPECIFICATION

(11) **EP 2 573 008 B1**
(45) Date of publication and mention of the grant of the patent: **19.08.2015**
(21) Application number: 12185726.2
(22) Date of filing: 24.09.2012
(51) Int. Cl.: B65D 85/804

(54) **Capsule for making an infused drink**
Kapsel zur Herstellung eines Brühgetränks
Capsule pour préparer une boisson infusée

(30) Priority: 26.09.2011 IT BS20110129
(43) Date of publication of application: 27.03.2013
(73) Proprietor: Capitani S.r.l., 22070 Solbiate (CO) (IT)
(72) Inventor: Capitani, Gionata, I-22070 Solbiate, Como (IT)
(74) Representative: Chimini, Francesco

(56) References cited:
- EP-A1- 0 512 148
- EP-A1- 0 512 468
- EP-A1- 0 554 469
- EP-A1- 2 218 653
- EP-A1- 2 287 090
- WO-A1-2010/016753
- WO-A1-2010/137953
- US-A- 4 136 202

## Description

The present invention relates to a capsule containing an aromatic substance for making an infused drink, such as coffee, tea, herb teas, fruit juices etc.

Capsules for use with machines for making an infused drink comprise a tray-like body containing an aromatic substance. The body has a peripheral annular rim suitable for abutting with a support surface which surrounds an infusion chamber of an infusion group when the capsule is inserted in said chamber. Normally these capsules are made from plastic material, unlike pods, which are made with a paper filter. A capsule according to the preamble of claim 1 is disclosed in CA 2072300.

In the attempt to resolve the problem, widely felt given the huge number of capsules made throughout the world, of the disposal of the used capsules in plastic material, capsules made from a sheet of paper have been proposed.

However, it has been found that the paper capsules proposed up until now do not always guarantee the optimal functioning provided by similar capsules in plastic. For example, in some cases problems of sealing at the moment of closing the infusion chamber have arisen. The Applicant has identified the cause of such malfunction in the peripheral annular rim which, made of the same thickness as the initial sheet of paper, proves too fine and soft. Such problem of excessive lightness of the rim is accentuated by the fact that the surface is not perfectly flat and uniform but is slightly undulated on account of the production process of the tray-like body.

The aim of the present invention is to propose a paper capsule able to overcome the drawbacks spoken of above.

Such purpose is achieved by a capsule according to claim 1.

The characteristics and advantages of the capsule according to the invention will be evident from the description given below, by way of a non-limiting example of one of its embodiments, according to the appended drawings. In said drawings:
- Figure 1 schematically represents a capsule;
- Figure 2 schematically represents another capsule;
- Figure 3 is a view of the separate elements of a capsule;
- Figure 4 schematically represents a capsule according to the invention; and
- Figures 5a and 5b schematically represent two coupling methods of the sealing cover of a capsule to the tray-like body.

In the course of the description below, the elements of the capsule according to the invention common to the various embodiments described will be indicated using the same reference numerals.

In one general embodiment, the capsule for making an infused drink comprises a tray-like body 12 substantially cylindrical or a truncated cone shape made from a sheet of paper or paper material and open at one end 14. Said tray-like body 12 therefore comprises a base or bottom wall 121, opposite the open end 14, and a side wall 122.

Paper material is taken to mean not only the widely used material made from wood or cellulose pulp, but also made from other fibres such as cotton, linen, hemp as well as, obviously, recycled paper.

The end wall 121 may be made integrally with the tray-like body 12, or may be attached to the side wall 122. Moreover, said end wall 121 may be completely closed or have holes or be made with a permeable or filter material, so to permit the entrance of the infusion liquid or the exit of the infused drink in the case of use for infusion groups without perforating means.

A cover or sealing film 16, preferably also made from paper or paper material, is attached to said open end 14 of the tray-like body.

The capsule is further provided with a peripheral annular rim 18 suitable for abutting with a support surface which surrounds an infusion chamber of an infusion group when the capsule is inserted in said chamber.

According to a preferred embodiment, the sheet of paper used to form the tray-like body 12 is of reduced thickness and/or consistency, such as to give the walls of the tray-like body 12 reduced rigidity and thereby a high deformability.

Thanks to such deformability the same capsule can also adapt to infusion chambers which are slightly different from each other and therefore be used in the infusion groups of different manufacturers. Moreover, the tray-like body 12 may be made slightly over-sized, in a radial and/or axial direction, compared to the dimensions of the cavity of an infusion chamber it is to be housed in, so as to undergo a slight compression at the moment of insertion in said chamber. This permits a dual advantageous effect to be achieved. In the first place, the capsule can be filled with the aromatic substance without the pressing thereof required by plastic capsules, thereby avoiding rupture of the paper walls. In the second place, the slight compression exerted by the walls which define the infusion chamber does not only make it possible to offset the reduced pressing of the aromatic substance but, also to achieve a compacting of the aromatic substance contained in the capsule better than that which can be achieved with a plastic capsule. As is known, the more the aromatic substance is compacted inside the capsule, the better the result of the infusion.

For example, the over-sizing of the body of the capsule in relation to the dimensions of the infusion chamber may be realised by forming the side wall of the capsule body and/or the end wall so that they are curved, that is to say convex.

According to the invention, the annular rim 18 has a greater rigidity than the tray-like body 12. This way, it is possible to marry the properties of the tray-like body 12 of being able to deform to achieve the advantages spoken of above with a resistance of the annular peripheral rim 18 to the pressure exerted by the infusion group at the moment of closing the infusion chamber.

According to one embodiment, said greater rigidity of the peripheral annular rim 18 is achieved by forming said rim 18 with a greater thickness than the thickness of the walls which define the tray-like body 12.

In one embodiment variation, the peripheral annular rim 18 comprises at least one layer in a material having a greater rigidity than that of the tray-like body 12.

In a further embodiment variation, the greater rigidity of the peripheral annular rim 18 is given by a particular conformation and/or processing of said peripheral annular rim 18.

In a preferred embodiment, said peripheral annular rim 18 comprises at least one annular portion 181 of the sheet of paper formed integrally with the tray-like body 12.

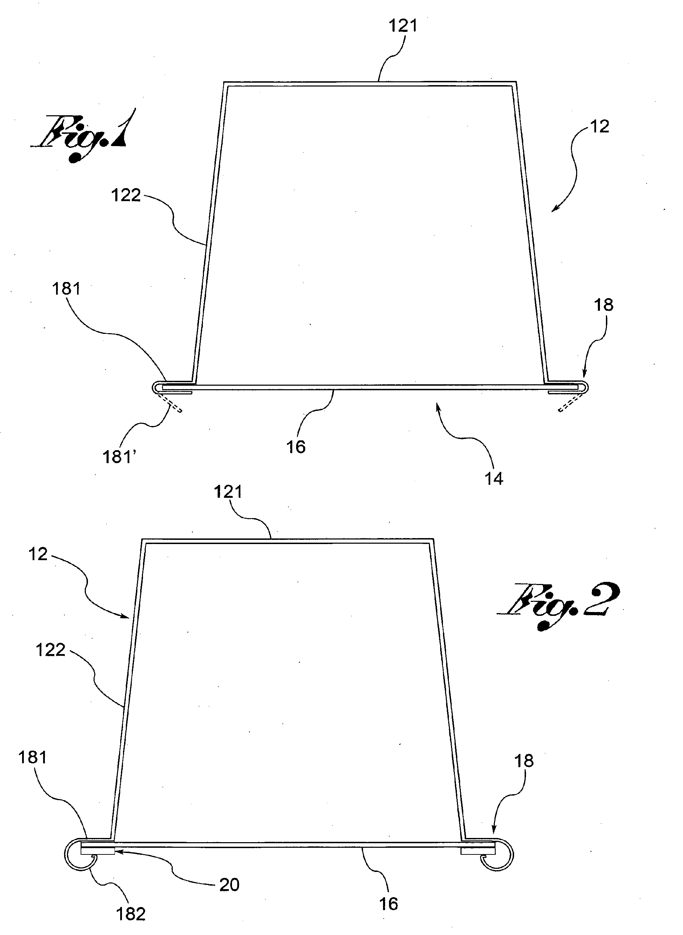

In the capsule shown in figure 1, the greater thickness of the peripheral annular rim 18 is obtained by folding the sheet of paper forming the walls of the tray-like body 12 back on itself at least once. In other words, the annular portion 181 of the sheet of paper suitable for forming the peripheral annular rim 18 is made with a breadth substantially double that of the predefined radial extension of the annular rim 18, so that, during the realisation of the tray-like body 12, it is possible to fold said annular portion 181 onto itself to achieve the predefined breadth and approximately double the thickness of the initial sheet of paper. The folded portion 181' of the sheet of paper can be folded forward, that is on the side opposite the side supporting the surface defining the infusion chamber, as shown in figure 1, or backwards, that is towards said surface defining the infusion chamber.

Moreover, in the capsule shown in figure 1, the cover or sealing film 16 is inserted between the folded portions of the peripheral annular rim 18. Advantageously, therefore, in this case said rim 18 may also act as a blocking element of the cover or sealing film.

Alternatively, the cover or sealing film 16 can be applied over the folded rim.

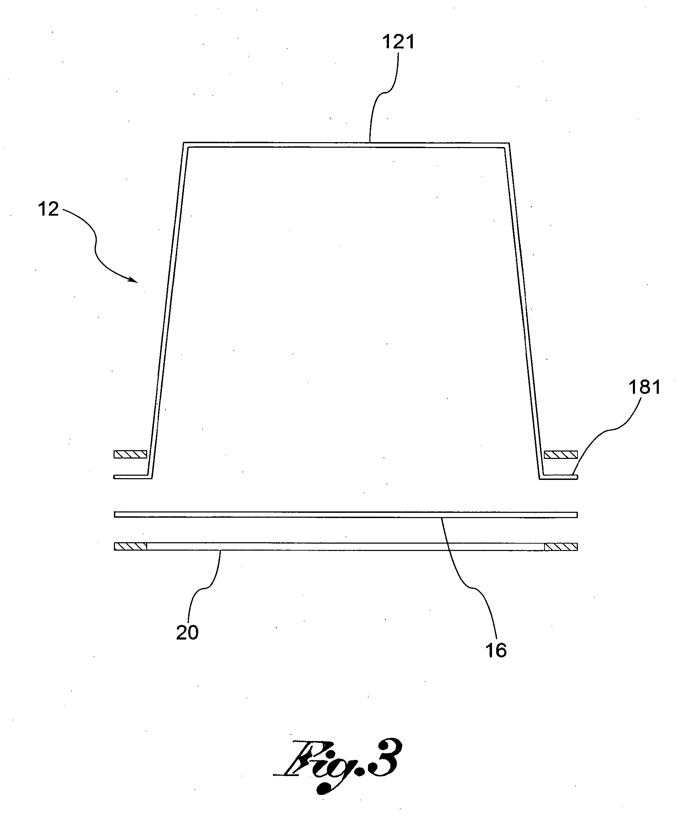

In the capsules shown in figures 2 and 3, the peripheral annular rim 18 comprises at least reinforcement ring 20 attached to the annular portion 181 of the sheet of paper which surrounds the open end 14 of the tray-like body 12.

In this case too, said reinforcement ring 20 may be applied to the front side of said annular portion 181 of the sheet of paper or on the rear side, or on both sides, as for example illustrated in figure 3.

In the capsules of figures 2, 3, the cover or sealing film 16 of the tray-like body is placed between the annular portion 181 of the sheet of paper and the reinforcement ring 20. Advantageously, therefore, the reinforcement ring also performs the function of attachment means of the cover or sealing film 16 to the tray-like body.

In the capsule shown in figure 3, the reinforcement ring is welded or glued to the annular portion of the sheet of paper 181 or to the cover or sealing film.

In the capsule shown in figure 2, the reinforcement ring 20 is retained on the annular portion 181 of the sheet of paper by means of a turn-up 182 of said annular portion 181, such as a curled turn up, on the reinforcement ring 20, or by means of a turn-up of the reinforcement ring 20 behind the annular portion 181.

Preferably, the reinforcement ring 20 is made from paper and/or other material comprising at least one resin or gum. In any case, the material of the reinforcement ring 20, as indeed that of the tray-like body 12 and of the cover or sealing film 16, is a food-grade material.

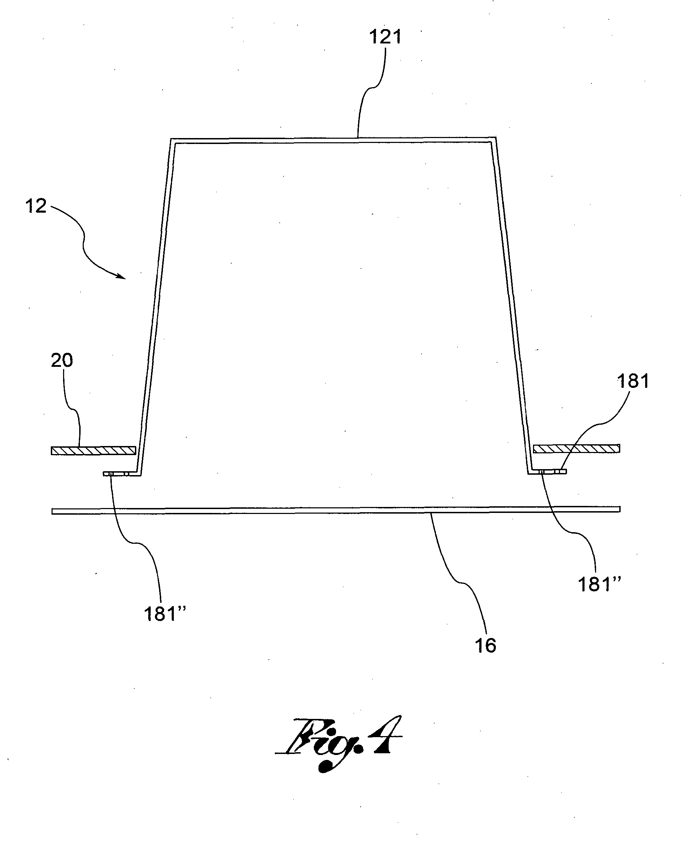

In an embodiment of the invention shown in figure 4, the reinforcement ring 20 is attached to the rear side of the annular portion 181 of the sheet of paper and is attached to the cover 16 in such a way that said annular portion 181 of the sheet of paper is retained between the reinforcement ring 20 and the cover 16. In other words, when the reinforcement ring 20 is coupled to the cover 16 the annular portion 181 remains pinched, that is wedged, between said two elements 16, 20.

Preferably, the reinforcement ring 20 and the sealing cover 16 are made from materials suitable for permitting their reciprocal gluing or welding. For example, the reinforcement ring 20 is made from a cellulose-based material, such as paper and/or in another rigid or semi-rigid material comprising at least one resin or gum. The sealing cover 16 is for example made from a cellulose-based material such as paper.

In one embodiment, the reinforcement ring 20 and the sealing cover 16 project radially beyond the annular portion 181, so as to present respective outer annular portions facing each other and reciprocally coupling. Alternatively, or in addition, the annular portion 181 is traversed by slots or holes 181" suitable for favouring the gluing or welding of the reinforcement ring 20 to the sealing cover 20.

Again with reference to the embodiment shown in figure 4, in addition to the welding or gluing, either the reinforcement ring or the cover 16 may be folded one onto the other so as to reciprocally couple and block the annular portion 181 between them.

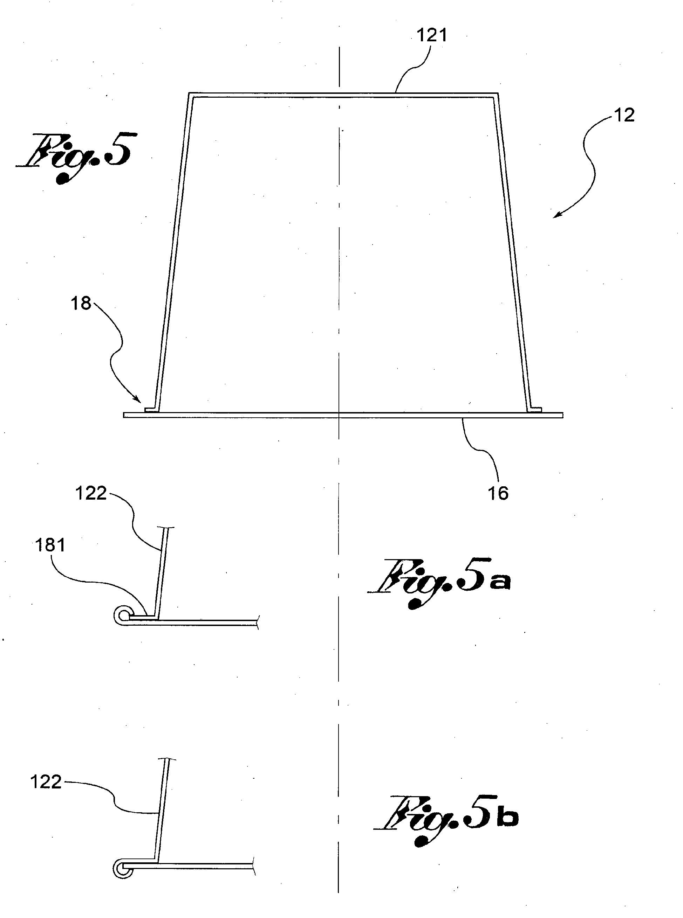

In the capsule shown in figure 5, the sealing cover 16 has a greater rigidity than the tray-like body, given for example by the greater thickness or by the type of material or processing utilised, and extends radially beyond the rim of the open end 14 so as to form the peripheral annular rim 18.

Such sealing cover 16 may abut with and be attached to the annular portion 181 of the sheet of paper of the tray-like body. The attachment may be made by means of gluing, welding or by deformation of said cover 16 and/or of said annular portion 181, for example formed of a turn-up on one of the two so as to engage the other (figures 5a and 5b).

In one embodiment of the capsule, the film or sealing cover 16 hermetically seals the tray-like body. Such capsule is therefore suitable for use in an infusion group provided with perforating means of the capsule.

In one embodiment variation, the film or sealing cover 16 is made with a permeable or filter material or is provided with holes for the passage of the infusion liquid inside the tray-like body 12. In such case the capsule may be used in infusion groups lacking perforating means of the capsule.

In one embodiment, the tray-like body 12 and the cover or sealing film 16 are coated with a film of plastic material, such as polyethylene or polyethylene terephtalate, ethylene vinyl alcohol (EVOH), suitable for acting as a barrier to the oxygen so as to prevent oxidation of the aromatic substance contained therein or the proliferation of bacteria in the case, for example, of fruit juices. The paper material which the tray-like body 12 is made of, the sealing film 16 and the protective film may, moreover, be made from a biodegradable material.

It is to be noted that the use of a reinforcement ring 20, as well as ensuring the hermetic seal of the closed infusion group, makes it possible to obtain capsules with a variable thickness of the peripheral annular rim 18, therefore suitable for being used on infusion groups having different strokes of the infusors in the closing step.

Such reinforcement ring 20 can be attached during the packaging or filling of the capsule, for example by the same machine performing filling, or at the moment of moulding the tray-like body, or at the moment of preparing the paper disc used to make the tray-like body, before moulding.

The reinforcement ring 20, in addition, guarantees the correct insertion and extraction of the paper capsule in and from the infusion chamber. In fact, such ring gives the outer annular rim of the capsule the rigidity needed to interact with the insertion and extraction means of the capsule. Such characteristic of stiffening the annular rim by means of the reinforcement ring is particularly advantageous in the extraction step, when the paper capsule is wet and an insufficiently rigid rim could stick to one of the two infusors and/or be damaged by the action itself of said extractor means.

It is to be noted that the tray-like body in the form of a truncated cone as opposed to the paper pods currently on the market, permits an improved interaction with the infusion group, especially in the step of extracting the drink, and a greater resistance to the pressing of the aromatic substance.

To further increase the rigidity of the tray-like body, a further reinforcement ring, preferably made from one of the materials described above, may be positioned around the truncated cone or cylindrical lateral surface of the tray-like body.

## Claims

1. Capsule for making an infused drink, comprising a tray-like body (12) substantially cylindrical or a truncated cone shape made from a sheet of paper or paper material and open at one end (14), and a cover or sealing film (16) applied to said open end of the tray-like body, said capsule being further provided with a peripheral annular rim (18) comprising at least one annular portion (181) of the sheet of paper or paper material formed integrally with the tray-like body (12) and suitable to abut with a support surface which surrounds an infusion chamber of an infusion group when the capsule is inserted in said chamber, at least said peripheral annular rim (18) having a greater rigidity than the tray-like body (12), wherein said peripheral annular rim (18) comprises at least one reinforcement ring (20) attached to said annular portion (181);
said capsule being **characterized in that** the reinforcement ring (20) and the sealing cover (16) project radially beyond the annular portion (181), so as to present respective outer annular portions facing each other and reciprocally coupling, the reinforcement ring (20) being attached to the rear side of the annular portion (181) of the sheet of paper or paper material and is glued or welded to the sealing cover (16) in such a way that said annular portion (181) remains pinched, that is wedged, between the reinforcement ring (20) and the sealing cover (16).

2. Capsule according to the previous claim, wherein the annular portion (181) is traversed by slots or holes (181") suitable for favouring the gluing or welding of the reinforcement ring (20) to the sealing cover (16).

3. Capsule according to any of the previous claims, wherein at least said peripheral annular rim (18) is of a greater thickness than the thickness of the walls which define said tray-like body (12).

4. Capsule according to the previous claim, wherein said greater thickness of the peripheral annular rim (18) is obtained by folding said annular portion (181) of the sheet of paper or paper material back on itself at least once.

5. Capsule according to any of the previous claims, wherein the cover or sealing film (16) of the tray-like body is positioned between the annular portion (181) of the sheet of paper or paper material and the reinforcement ring (20).

6. Capsule according to any of the previous claims, wherein the reinforcement ring is made from paper and/or other material comprising at least one resin or gum.

7. Capsule according to any of the previous claims, wherein said cover or sealing film is made of paper or paper material.

8. Capsule according to any of the previous claims, wherein the film or sealing cover hermetically seals the tray-like body.

9. Capsule according to any of the claims 1-7, wherein the film or sealing cover is made with a permeable or filter material or is provided with holes for the passage of the infusion liquid inside the tray-like body.

10. Capsule according to any of the previous claims, wherein the tray-like body (12) is formed entirely in one piece.

11. Capsule according to any of the previous claims, wherein the tray-like body and cover or sealing film are coated with a film of plastic material suitable to prevent oxidation of the aromatic substance contained inside it.

12. Capsule according to the previous claim, wherein said plastic material is polyethylene or polyethylene terephthalate.

13. Capsule according to claim 1, wherein the paper material is selected from the group consisting in a material made from wood or cellulose pulp, fibres such as cotton, linen, hemp, and recycled paper.

## Patentansprüche

1. Kapsel zum Herstellen eines Aufgussgetränks, umfassend einen im Wesentlichen zylindrischen oder kegelstumpfförmigen schalenartigen Körper (12), welcher aus einem Bogen aus Papier oder Papiermaterial hergestellt ist und an einem Ende (14) offen ist, und einen Abdeckungs- oder Dichtungsfilm (16), welcher an dem offenen Ende des schalenartigen Körpers angebracht ist, wobei die Kapsel ferner mit einem ringförmigen Umfangsrand (18) bereitgestellt ist, welcher wenigstens einen ringförmigen Abschnitt (181) des Bogens aus Papier oder Papiermaterial umfasst, welcher integral mit dem schalenartigen Körper (12) gebildet und dazu geeignet ist, gegen eine Tragefläche anzuliegen, welche eine Aufgusskammer einer Aufgussgruppe umgibt, wenn die Kapsel in die Kammer eingelegt ist, wobei wenigstens der ringförmige Umfangsrand (18) eine höhere Festigkeit aufweist als der schalenförmige Körper (12), wobei der ringförmige Umfangsrand (18) wenigstens einen Verstärkungsring (20) umfasst, welcher an dem ringförmigen Abschnitt (181) angebracht ist;
wobei die Kapsel **dadurch gekennzeichnet ist, dass** der Verstärkungsring (20) und die Dichtungsabdeckung (16) sich radial über den ringförmigen Abschnitt (181) hinaus erstrecken, um so jeweilige äußere ringförmige Abschnitte darzustellen, welche zueinander weisen und miteinander koppeln, wobei der Verstärkungsring (20) an der hinteren Seite des ringförmigen Abschnitts (181) des Bogens aus Papier oder Papiermaterial angebracht ist und an die Dichtungsabdeckung (16) derart angeklebt oder angeschweißt ist, dass der ringförmige Abschnitt (181) zwischen dem Verstärkungsring (20) und der Dichtungsabdeckung (16) eingeklemmt, das heißt verkeilt, bleibt.

2. Kapsel nach dem vorhergehenden Anspruch, wobei der ringförmige Abschnitt (181) von Schlitzen oder Löchern (181") durchlaufen ist, welche dazu geeignet sind, das Verkleben oder Verschweißen des Verstärkungsrings (20) an die Dichtungsabdeckung (16) zu begünstigen.

3. Kapsel nach einem der vorhergehenden Ansprüche, wobei wenigstens der ringförmige Umfangsrand (18) von einer größeren Dicke als die Dicke der Wände ist, welche den schalenartigen Körper (12) definieren.

4. Kapsel nach dem vorhergehenden Anspruch, wobei die größere Dicke des ringförmigen Umfangsrands (18) erhalten wird, indem der ringförmige Abschnitt (181) des Bogens aus Papier oder Papiermaterial wenigstens einmal auf sich selbst zurückgefaltet wird.

5. Kapsel nach einem der vorhergehenden Ansprüche, wobei der Abdeckungs- oder Dichtungsfilm (16) des schalenförmigen Körpers zwischen dem ringförmigen Abschnitt (181) des Bogens aus Papier oder Papiermaterial und dem Verstärkungsring (20) positioniert ist.

6. Kapsel nach einem der vorhergehenden Ansprüche, wobei der Verstärkungsring aus Papier oder/und anderem Material hergestellt ist, welches wenigstens ein Harz oder Gummi umfasst.

7. Kapsel nach einem der vorhergehenden Ansprüche, wobei der Abdeckungs- oder Dichtungsfilm aus Papier oder Papiermaterial hergestellt ist.

8. Kapsel nach einem der vorhergehenden Ansprüche, wobei die Film- oder Dichtungsabdeckung den schalenartigen Körper hermetisch abdichtet.

9. Kapsel nach einem der Ansprüche 1 bis 7, wobei die Film- oder Dichtungsabdeckung mit einem permeablen oder einem Filtermaterial hergestellt ist oder mit Löchern für den Durchgang der Aufgussflüssigkeit innerhalb des schalenartigen Körpers bereitgestellt ist.

10. Kapsel nach einem der vorhergehenden Ansprüche, wobei der schalenartige Körper (12) vollständig aus einem Stück gebildet ist.

11. Kapsel nach einem der vorhergehenden Ansprüche, wobei der schalenartige Körper und der Abdeckungs- oder Dichtungsfilm mit einem Film aus Plastikmaterial beschichtet sind, welcher dazu geeignet ist, eine Oxidation der darin enthaltenen aromatischen Substanz zu verhindern.

12. Kapsel nach dem vorhergehenden Anspruch, wobei das Plastikmaterial Polyethylen oder Polyethylenterephthalat ist.

13. Kapsel nach Anspruch 1, wobei das Papiermaterial aus der Gruppe ausgewählt ist, welche aus einem Material besteht, welches aus Holz oder Zellstoff, Fasern, wie beispielsweise Baumwolle, Leinen, Hanf, und Recyclingpapier hergestellt ist.

## Revendications

1. Capsule pour préparer une boisson infusée, comprenant un corps de type barquette (12) sensiblement cylindrique ou ayant une forme de cône tronqué constitué d'une feuille de papier ou d'un matériau de papier et ouvert à une extrémité (14), et un film de protection ou d'étanchéité (16) appliqué à ladite extrémité ouverte du corps de type barquette, ladite capsule étant en outre dotée d'un rebord annulaire périphérique (18) comprenant au moins une partie annulaire (181) de la feuille de papier ou du matériau de papier formé d'un seul tenant avec le corps de type barquette (12) et adapté pour venir en butée avec une surface de support qui entoure une chambre d'infusion d'un groupe d'infusion lorsque la capsule est insérée dans ladite chambre, au moins ledit rebord annulaire périphérique (18) ayant une rigidité supérieure à celle du corps de type barquette (12), dans lequel le rebord annulaire périphérique (18) comprend au moins une bague de renfort (20) attachée à ladite partie annulaire (181) ;
ladite capsule étant **caractérisée en ce que** la bague de renfort (20) et la protection d'étanchéité (16) se projettent radialement au-delà de la partie annulaire (181), de sorte que les parties annulaires externes respectives se retrouvent face à face et se couplent réciproquement, la bague de renfort (20) étant attachée au côté arrière de la partie annulaire (181) de la feuille de papier ou du matériau de papier et est collée ou soudée à la protection d'étanchéité (16) de telle manière que ladite partie annulaire (181) reste pincée, à savoir coincée, entre la bague de renfort (20) et la protection d'étanchéité (16).

2. Capsule selon la revendication précédente, dans laquelle la partie annulaire (181) est traversée par des fentes ou orifices (181") adapté (e) s pour favoriser le collage ou soudage de la bague de renfort (20) à la protection d'étanchéité (16).

3. Capsule selon l'une quelconque des revendications précédentes, dans laquelle au moins ledit bord annulaire périphérique (18) est d'une épaisseur supérieure à l'épaisseur des parois qui définissent ledit corps de type barquette (12).

4. Capsule selon la revendication précédente, dans laquelle ladite épaisseur supérieure du rebord annulaire périphérique (18) est obtenue en repliant ladite partie annulaire (181) de la feuille de papier ou du matériau de papier sur elle-même au moins une fois.

5. Capsule selon l'une quelconque des revendications précédentes, dans laquelle la protection ou le film d'étanchéité (16) du corps de type barquette est positionné(e) entre la partie annulaire (181) de la feuille de papier ou du matériau de papier et la bague de renfort (20).

6. Capsule selon l'une quelconque des revendications précédentes, dans laquelle la bague de renfort est constituée de papier et/ou d'un autre matériau comprenant au moins une résine ou gomme.

7. Capsule selon l'une quelconque des revendications précédentes, dans laquelle ladite protection ou ledit film d'étanchéité est constitué(e) de papier ou de matériau de papier.

8. Capsule selon l'une quelconque des revendications précédentes, dans laquelle le film ou la protection d'étanchéité scelle hermétiquement le corps de type barquette.

9. Capsule selon l'une quelconque des revendications 1 à 7, dans laquelle le film ou la protection d'étanchéité est constitué(e) d'un matériau perméable ou filtrant ou est doté(e) d'orifices pour le passage du liquide d'infusion à l'intérieur du corps de type barquette.

10. Capsule selon l'une quelconque des revendications précédentes, dans laquelle le corps de type barquette (12) est formé entièrement d'une seule pièce.

11. Capsule selon l'une quelconque des revendications précédentes, dans laquelle le corps de type barquette et la protection ou le film d'étanchéité sont revêtus d'un film de matière plastique approprié pour empêcher l'oxydation de la substance aromatique contenue à l'intérieur.

12. Capsule selon la revendication précédente, dans laquelle ledit matériau plastique est du polyéthylène ou du téréphtalate de polyéthylène.

13. Capsule selon la revendication 1, dans laquelle le matériau de papier est choisi dans le groupe constitué d'un matériau issu de pâte de bois ou de cellulose, de fibres telles que du coton, du lin, du chanvre et de papier recyclé.
